# EUROPÄISCHE PATENTSCHRIFT

(11) **EP 4 368 947 B1**
(45) Veröffentlichungstag und Bekanntmachung des Hinweises auf die Patenterteilung: **06.05.2026**
(21) Anmeldenummer: 22207207.6
(22) Anmeldetag: 14.11.2022
(51) Int. Cl.: G01C 15/06, H01R 13/66, H01R 13/443, H01R 13/46

(54) **ADAPTER ZUM ANBRINGEN EINER VERMESSUNGSMARKE AN EINEM REFERENZPUNKT**
ADAPTER FOR ATTACHING A MEASURING MARK TO A REFERENCE POINT
ADAPTATEUR POUR FIXER UN REPÈRE DE MESURE À UN POINT DE RÉFÉRENCE

(43) Veröffentlichungstag der Anmeldung: 15.05.2024
(73) Patentinhaber: Rothbucher, Georg, 83435 Bad Reichenhall (DE)
(72) Erfinder: Rothbucher, Georg, 83435 Bad Reichenhall (DE)
(74) Vertreter: Schaumburg und Partner Patentanwälte mbB

(56) Entgegenhaltungen:
- EP-A2- 3 951 317
- DE-A1- 102007 035 998
- DE-A1- 102012 008 647
- DE-U1- 202021 102 669

## Beschreibung

Die Erfindung betrifft eine Vorrichtung zum Vermessen eines Referenzpunktes, die einen Adapter zum Anbringen einer Vermessungsmarke an einem Referenzpunkt und eine Vermessungsmarke umfasst, sowie ein Verfahren zum Vermessen eines Referenzpunktes unter Verwendung eines Adapters. Vermessungsmarken werden üblicherweise an ortsfesten Objekten wie z.B. in oder an Gebäuden angebracht. Sie dienen dort als Vermessungspunkte, die unter Verwendung an sich bekannter Messgeräte wie etwa Laser, Scanner und Totalstationen vermessen werden. Es ist von besonderer Bedeutung, eine solche Vermessungsmarke in einer definierten Lage zu montieren. Dabei ist in einer Reihe von Anwendungen sicherzustellen, dass diese definierte Lage einen über die Zeit unveränderlichen Referenzpunkt bildet. So kann es erforderlich sein, ein- und denselben Referenzpunkt zu verschiedenen Zeiten in einer Vielzahl von Messungen zu nutzen. In einer solchen Situation ist es aufwändig und fehleranfällig, bei jeder Messung erneut den Referenzpunkt festzulegen.

Um eine Vermessungsmarke in einer definierten Lage zu montieren, wird in manchen Anwendungen ein standardisierter Messbolzen verwendet, der fest an dem zu vermessenden Objekt angebracht wird. Die Vermessungsmarke wird dann an dem Messbolzen befestigt. Damit ist sichergestellt, dass der Referenzpunkt nur einmal festgelegt werden muss und auch in späteren Messungen verwendet werden kann. Jedoch ist eine solche Festlegung des Referenzpunktes in Folge der Verwendung eines eigens hierfür vorgesehenen Messbolzens relativ aufwendig und teuer.

Dokument EP 3 951 317 A2 offenbart entsprechende Vorrichtungen zum Anbringen von Vermessungsmarken an Messbolzen. Ergänzend offenbart Dokument DE 20 2021 102 669 U1 Vorrichtungen zur Markierung von Vermessungsobjekten.

Der Erfindung liegt die Aufgabe zugrunde, die Anbringung einer Vermessungsmarke an einem Referenzpunkt besonders einfach und kostengünstig zu ermöglichen.

Diese Aufgabe wird durch eine Vorrichtung gemäß Anspruch 1 gelöst. Vorteilhafte Weiterbildungen sind Gegenstand der abhängigen Ansprüche sowie der folgenden Beschreibung.

Der erfindungsgemäße Adapter umfasst einen Adapterkörper, an dem eine Vermessungsmarke fest angebracht oder anbringbar ist. Zumindest ein Teil des Adapterkörpers ist zu einem Stecker geformt, der an eine als Referenzpunkt dienende Steckdose derart angepasst ist, dass er zur Herstellung einer formschlüssigen Steckverbindung in die Steckdose einsteckbar und im eingesteckten Zustand von der Steckdose elektrisch isoliert ist.

Die erfindungsgemäße Lösung nutzt den Umstand, dass eine Steckdose einen Punkt mit fest vorgegebener Lage definiert, der in einer Vermessungsoperation als Referenzpunkt genutzt werden kann. Zudem macht sich diese Lösung zunutze, dass eine Steckdose darauf ausgelegt ist, in wohl definierter Weise mit einem an die Steckdose angepassten Stecker zusammenzuwirken, um mit diesem eine formschlüssige Steckverbindung zu realisieren. Die Erfindung sieht nun einen die Vermessungsmarke tragenden Adapter mit einem Stecker vor, der in seiner Bauform an eine übliche Steckdose angepasst ist, um mit der Steckdose eine formschlüssige Steckverbindung herzustellen. Damit ist es möglich, die Vermessungsmarke einfach dadurch, dass der Adapter in die Steckdose gesteckt wird, an einem festen Referenzpunkt anzubringen.

Um dem Benutzer die Anbringung der Vermessungsmarke an dem Referenzpunkt gefahrlos zu ermöglichen, ist der Adapter zudem so ausgeführt, dass er im Unterschied zu einem in herkömmlicher Weise mit der Steckdose zusammenwirkenden Stecker im eingesteckten Zustand von der Steckdose elektrisch isoliert ist.

Der Stecker ist vorzugsweise entsprechend einem Typ von Netzwerkstecker geformt, der für den Anschluss an ein Niederspannungsnetz verwendbar ist. Beispielsweise ist der Stecker an einen der üblichen Netzwerksteckertypen angepasst, die in verschiedenen Ländern bzw. Regionen für den Anschluss von Elektrogeräten und Leuchten in der untersten Ebene der Niederspannungsnetze verwendet werden. Zu nennen sind hier lediglich beispielhaft und ohne Beschränkung auf diese Beispiele folgende Steckertypen:
Stecker-Typ F / "Schukostecker" (CEE 7/4)
Stecker-Typ C / "Konturenstecker" (CEE 7/17)
Stecker-Typ C / "Eurostecker" (CEE 7/16)
Stecker-Typ N (IEC 60906-1)
Stecker-Typ SN 441011 Typ 12
Stecker-Typ D (BS 546, 5 A)
Stecker-Typ E (CEE 7/5)
Stecker-Typ B (NEMA 5-15, 3-polig)
Stecker-Typ M (BS 546, 15A)
Stecker-Typ K (DS 60884-2-D1)
Stecker-Typ G / "Commonwealth-Stecker" (BS 1363)
Stecker-Typ I / (AS 3112)
Stecker-Typ J (SEV 1011)
Stecker-Typ L (CEI 23-50)
Stecker-Typ M (BS 546, 15A)

In einer bevorzugten Ausführungsform weist der Adapterkörper an seinem von dem Stecker abgewandten Ende die Vermessungsmarke oder ein Montageelement zur lösbaren Anbringung der Vermessungsmarke auf. Die Lage des Referenzpunktes ist damit über die Abmessung des von dem Stecker abgewandten Adapterendes festgelegt, an dem die Vermessungsmarke angebracht ist.

Vorzugsweise ist das Montageelement eine Adapterplatte, an der die Vermessungsmarke lösbar anbringbar ist. Die Anbringung der Vermessungsmarke an der Adapterplatte kann beispielsweise mittels einer Schraubverbindung, einer Steckverbindung, einer Klebeverbindung oder auch magnetisch erfolgen.

Ist eine magnetische Ankopplung der Vermessungsmarke an den Adapter vorgesehen, so ist die Adapterplatte in einer besonders bevorzugten Ausführungsform aus Metall gefertigt, beispielsweise aus einem korrosionsbeständigen Stahl.

In dieser Ausführungsform weist die Vermessungsmarke vorzugsweise eine Magnetanordnung auf, die an der aus Metall gefertigten Adapterplatte anbringbar ist. Dies macht es besonders einfach, die Vermessungsmarke allein magnetisch, d.h. ohne zusätzliche Befestigungsmittel an dem Adapter zu befestigen. Beispielsweise kann die Vermessungsmarke mit einem Sockel versehen sein, an dessen Unterseite sich die Magnetanordnung befindet.

Der Stecker weist beispielsweise mindestens einen Kontaktstift auf, der an eine zugehörige Kontaktöffnung der Steckdose angepasst ist. Dies bedeutet, dass der Kontaktstift in formschlüssigen Eingriff mit der Kontaktöffnung gebracht wird, wenn der an dem Adapter ausgebildete Stecker in die Steckdose gesteckt wird.

Der Stecker kann beispielsweise auch mindestens eine Aussparung aufweisen, die an eine Erdungsklemme der Steckdose angepasst ist. Beim Einstecken wird so die Erdungsklemme der Steckdose in der in dem Stecker ausgebildeten Aussparung aufgenommen, wodurch eine formschlüssige Steckverbindung hergestellt wird. Zusätzlich oder alternativ kann der Stecker auch einen Vorsprung aufweisen, der an eine Vertiefung der Steckdose angepasst ist.

In einer bevorzugten Ausführungsform ist der Adapter als Ganzes aus einem elektrisch isolierenden Material, z.B. aus einem Kunststoff gefertigt. Dadurch ist sichergestellt, dass der Stecker im eingesteckten Zustand besonders zuverlässig von der Steckdose elektrisch isoliert ist. Es ist jedoch nicht unbedingt erforderlich, den gesamten Adapter elektrisch isoliert auszuführen, sofern die elektrische Isolierung des Adapters von der Steckdose sichergestellt ist. So können etwa einzelne Kontaktstifte des Adapters, wie im Falle eines herkömmlichen elektrischen Steckers, durchaus elektrisch leitend sein. Zu gewährleisten ist dann, dass die elektrische Isolierung des Adapters von der Steckdose in anderer Weise erzielt wird, beispielsweise durch Einbetten der Kontaktstifte in das elektrisch isolierende Material des Adapterkörpers.

Der Adapter ist vorzugsweise aus einem Spritzgusssteil gefertigt. Die Anwendung eines Spritzgussverfahrens in der Fertigung erlaubt eine freie Wahl der Form und Oberflächenstruktur des Adapters. Damit lässt sich in nahezu beliebiger Weise eine gewünschte Steckerform in Anpassung an den jeweiligen Steckdosentyp realisieren, der als Referenzpunkt genutzt wird.

Gemäß der Erfindung ist eine Vorrichtung zum Vermessen eines Referenzpunktes vorgesehen, die einen Adapter vorstehend beschriebener Art sowie eine Vermessungsmarke umfasst, die lösbar an dem Adapterkörper angebracht ist.

In einer bevorzugten Ausführungsform dieser Vorrichtung weist die Vermessungsmarke eine Vertiefung auf, die in ihrer Form an eine Adapterplatte vorstehend beschriebener Art angepasst ist. Beispielsweise haben die Vertiefung und daran angepasst auch die Adapterplatte jeweils die Form eines regelmäßigen Polygons mit abgerundeten Ecken. Eine solche Form erleichtert es dem Benutzer, die Adapterplatte lagerichtig in die Vertiefung der Vermessungsmarke einzulegen. Von besonderem Vorteil ist es, wenn die Vermessungsmarke Teil eines ganzen Sortiments von Marken ist, die alle eine Vertiefung vorgenannter Art aufweisen und somit darauf ausgelegt sind, zur Montage an einem Referenzpunkt in gleicher Weise auf die Adapterplatte gesteckt zu werden.

Als Vermessungsmarke kann eine beliebige Art von Marke verwendet werden, wie etwa eine Reflexzielmarke, eine Klebemarke, eine Vermessungsplakette, ein Prisma, eine Laserscanner-Kugel oder dergleichen.

Nach einem weiteren Aspekt der Erfindung ist eine Einrichtung vorgesehen, die eine Steckdose sowie einen Adapter vorstehend beschriebener Art umfasst, dessen Stecker zur Herstellung einer formschlüssigen Steckverbindung in die Steckdose einsteckbar und im eingesteckten Zustand von der Steckdose elektrisch isoliert ist.

Schließlich sieht die Erfindung ein Verfahren zum Vermessen eines Referenzpunktes unter Verwendung eines Adapters oben beschriebener Art vor. Bei diesem Verfahren wird der Adapter an einer als Referenzpunkt dienenden Steckdose angebracht, indem der zu dem Stecker geformte Teil des Adapterkörpers in die Steckdose eingesteckt und dadurch eine formschlüssige und elektrisch isolierte Verbindung mit der Steckdose hergestellt wird.

Die Erfindung wird im Folgenden anhand der Figuren näher erläutert. Darin zeigen:
- Figur 1: eine perspektivische Ansicht eines Adapters nach einem ersten Ausführungsbeispiel,
- Figur 2: eine Vorderansicht des Adapters gemäß erstem Ausführungsbeispiel,
- Figur 3: eine Rücksicht des Adapters gemäß erstem Ausführungsbeispiel,
- Figur 4: eine Seitenansicht des Adapters gemäß erstem Ausführungsbeispiel,
- Figur 5: eine perspektivische Ansicht eines Adapters nach einem zweitem Ausführungsbeispiel,
- Figur 6: eine perspektivische Ansicht eines Adapters nach einem dritten Ausführungsbeispiel,
- Figur 7: eine perspektivische Ansicht eines Adapters nach einem vierten Ausführungsbeispiel,
- Figur 8: eine Seitenansicht eines Adapters nach einem fünftem Ausführungsbeispiel,
- Figur 9: eine weitere Seitenansicht des Adapters gemäß fünftem Ausführungsbeispiel,
- Figur 10: eine perspektivische Ansicht eines Adapters nach einem sechsten Ausführungsbeispiel,
- Figur 11: eine Vorderansicht des Adapters gemäß sechstem Ausführungsbeispiel,
- Figur 12: eine Rücksicht des Adapters gemäß sechstem Ausführungsbeispiel,
- Figur 13: eine Seitenansicht des Adapters gemäß sechstem Ausführungsbeispiel,
- Figur 14: eine weitere Seitenansicht des Adapters gemäß sechstem Ausführungsbeispiel,
- Figur 15: eine perspektivische Ansicht eines Adapters nach einem siebenten Ausführungsbeispiel,
- Figur 16: eine Vorderansicht des Adapters gemäß siebentem Ausführungsbeispiel,
- Figur 17: eine Rücksicht des Adapters gemäß siebentem Ausführungsbeispiel,
- Figur 18: eine Seitenansicht des Adapters gemäß siebentem Ausführungsbeispiel,
- Figur 19: eine weitere Seitenansicht des Adapters gemäß siebentem Ausführungsbeispiel,
- Figur 20: eine perspektivische Ansicht eines Adapters nach einem achten Ausführungsbeispiel,
- Figur 21: eine Vorderansicht des Adapters gemäß achtem Ausführungsbeispiel,
- Figur 22: eine Rücksicht des Adapters gemäß achtem Ausführungsbeispiel,
- Figur 23: eine Seitenansicht des Adapters gemäß achtem Ausführungsbeispiel, und
- Figur 24: eine weitere Seitenansicht des Adapters gemäß achtem Ausführungsbeispiel.

Im Folgenden wird ein erfindungsgemäßer Adapter anhand von speziellen Ausführungsbeispielen beschrieben.

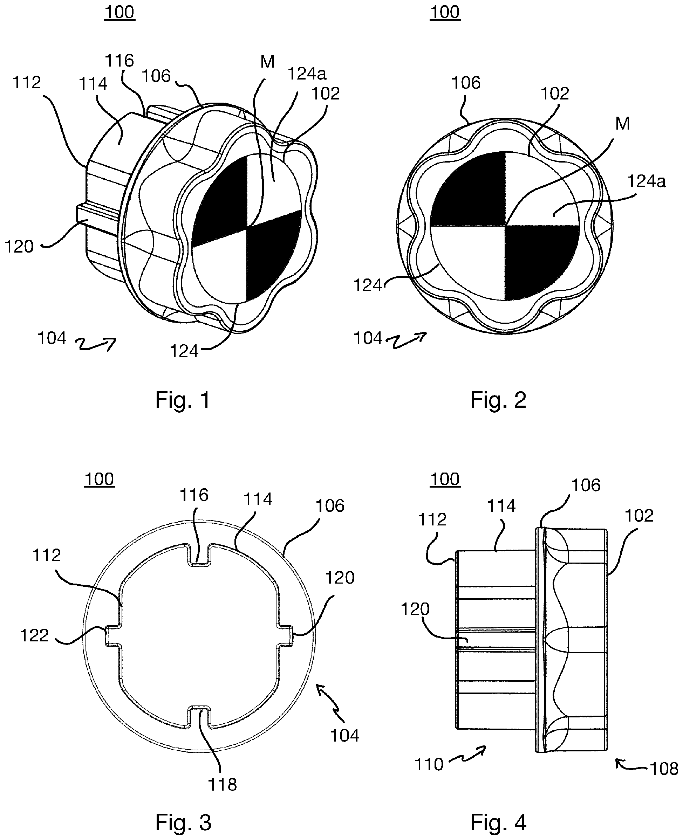

Die Figuren 1 bis 4 zeigen einen Adapter 100, der ein erstes Ausführungsbeispiel darstellt, in verschiedenen Ansichten. Dabei ist in Figur 1 eine perspektivische Ansicht, in Figur 2 eine Vorderansicht, in Figur 3 eine Rückansicht und in Figur 4 eine Seitenansicht des Adapters 100 dargestellt.

Der Adapter 100 ist dazu bestimmt, einen Vermessungsmarke 102 an einem Referenzpunkt anzubringen. Dieser Referenzpunkt wird in diesem und in allen weiteren Ausführungsbeispielen jeweils durch eine Steckdose definiert, die in den Figuren nicht gezeigt ist. Diese Steckdose ist beispielsweise darauf ausgelegt, eine elektrische Steckverbindung mit einem Netzwerkstecker herzustellen, der in einem Niederspannungsnetzwerk für den Anschluss eines Elektrogerätes bestimmt ist.

In dem Ausführungsbeispiel nach den Figuren 1 bis 4 ist der auf die Steckdose abgestimmte Steckertyp der Typ F (CEE 7/4), der überwiegend in Europa verwendet wird und dort auch unter dem Akronym "Schukostecker" bekannt ist. Es versteht sich von selbst, dass die Bezugnahme auf diese spezielle elektrische Steckverbindung nur beispielhaft zu verstehen ist. Es kann auch auf andere gängige Steckverbindersysteme Bezug genommen werden.

Der Adapter 100 weist einen Adapterkörper 104 auf, der in diesem speziellen Beispiel grob betrachtet in etwa die Form eines Zylinders hat. Die Achse des Zylinders geht durch einen Mittelpunkt M der Vermessungsmarke 102. Bei genauerer Betrachtung weist der Adapterkörper 104 einen kreisrund umlaufenden Flansch 106 auf, der axial etwa in der Mitte senkrecht zur Zylinderachse angeordnet ist. Der Flansch 106 unterteilt den Adapterkörper 104 in zwei Abschnitte 108 und 110, die sich von dem Flansch 106 axial in entgegengesetzte Richtungen erstrecken. Bezugnehmend auf Figur 4 erstreckt sich der Abschnitt 108 ausgehend von dem Flansch 106 nach rechts in Vorwärtsrichtung, während der Abschnitt 110 nach links in Rückwärtsrichtung weist.

Der Teil des Adapterkörpers 104, der den rückwärtigen Abschnitt 110 bildet, ist zu einem Stecker 112 geformt. Die Form des Steckers 112 ist an die Steckdose derart angepasst, dass der Stecker 112 in die Steckdose eingesteckt werden kann, um mit letzterer eine formschlüssige Steckverbindung herzustellen. Dies bedeutet, dass der an dem Adapterkörper 104 ausgebildete Stecker 112 in diesem speziellen Beispiel in seiner äußeren Form im Wesentlichen an einen üblichen Schukostecker angeglichen ist, der zur Herstellung einer elektrische Steckverbindung in die Steckdose einsteckbar ist. Dabei ist es möglich, aber nicht zwingend erforderlich, dass der an dem Adapterkörper 104 ausgebildete Stecker 112 die Form eines Schukosteckers in allen Einzelheiten identisch übernimmt. Sicherzustellen ist jedenfalls, dass die Form des Steckers 112 zumindest insoweit mit der Form eines Schukosteckers übereinstimmt, dass die gewünschte formschlüssige Steckverbindung mit der Steckdose erzielt wird.

Bei dem in den Figuren 1 bis 4 dargestellten Adapter 102 ist es beispielsweise ausreichend, dass eine mit 114 bezeichnete Außenumfangsfläche des Steckers 112 der Außenumfangsfläche eines Schukosteckers nachgebildet ist. Dementsprechend sind an der Außenumfangsfläche 114 des Steckers 112 zwei längliche Aussparungen 116, 118 sowie zwei längliche Vorsprünge 120, 122 ausgebildet, die sich jeweils in axialer Richtung erstrecken. Wie in der Rückansicht nach Figur 3 zu erkennen ist, haben die beiden Aussparungen 116, 118 in Umfangsrichtung einen Winkelabstand von 180°. Gleiches gilt für die beiden Vorsprünge 120, 122. Dabei ist die Anordnung der Vorsprünge 120, 122 als Ganzes gegenüber der aus den beiden Aussparungen 116, 118 gebildeten Anordnung in Umfangsrichtung um einen Winkel von 90° versetzt.

Die beiden Aussparungen 116, 118 des Steckers 112a sind an zugehörige Erdungsklemmen angepasst, die in der in den Figuren nicht gezeigten Steckdose vorgesehen sind. Entsprechend sind die beiden Vorsprünge 120, 122 des Steckers 112 an zugehörige Vertiefungen der Steckdose angepasst. Wird der Stecker 112 des Adapters 100 in die Steckdose eingesteckt, so kommen die Aussparungen 116, 118 und die Vorsprünge 120, 122 des an dem Adapter 100a ausgebildeten Steckers 112 in Eingriff mit den ihnen zugeordneten Erdungsklemmen bzw. Vertiefungen der Steckdose. Damit wird der Adapter 100 formschlüssig in der Steckdose befestigt.

Bei dem in den Figuren 1 bis 4 gezeigten Ausführungsbeispiel weist der Stecker 112 keine Stiftelemente auf, die den bei einem herkömmlichen Schukostecker vorgesehenen Kontaktstiften entsprechen würden. Eine ausreichend stabile formschlüssige Verbindung kann in diesem Beispiel auch ohne solche Stiftelemente erzielt werden. Dies schließt aber nicht aus, entsprechende Stiftelemente bei dem Adapter 100 vorzusehen, um die formschlüssige Verbindung des Adapters 100 mit der Steckdose noch stabiler zu machen.

Um dem Benutzer ein gefahrloses Einstecken des Adapters 100 in die Steckdose zu ermöglichen, ist der Stecker 112 so auszuführen, dass er im eingesteckten Zustand von der Steckdose elektrisch isoliert ist. Hierzu ist in dem gezeigten Ausführungsbeispiel der Adapter 100 als Ganzes aus einem elektrisch isolierenden Material, z.B. einem Kunststoff gefertigt. Beispielsweise kann der Adapter 100 in Form eines einstückigen Spritzgussteils hergestellt sein.

Die Vermessungsmarke 102 ist beispielsweise eine Laserscanner-Marke, die ein Muster 124 mit vier Sektoren 124a aufweist. Das Muster 124 ermöglicht z.B. die Zuweisung raumbezogener Referenzinformation zu einem Geodatensatz. Die Vermessungsmarke 102 kann an dem Ende des Adapters 100, das von dem Stecker 112 abgewandt ist, angebracht sein. Beispielsweise kann sie als eine Marke ausgeführt sein, die auf den Adapter 102 geklebt wird.

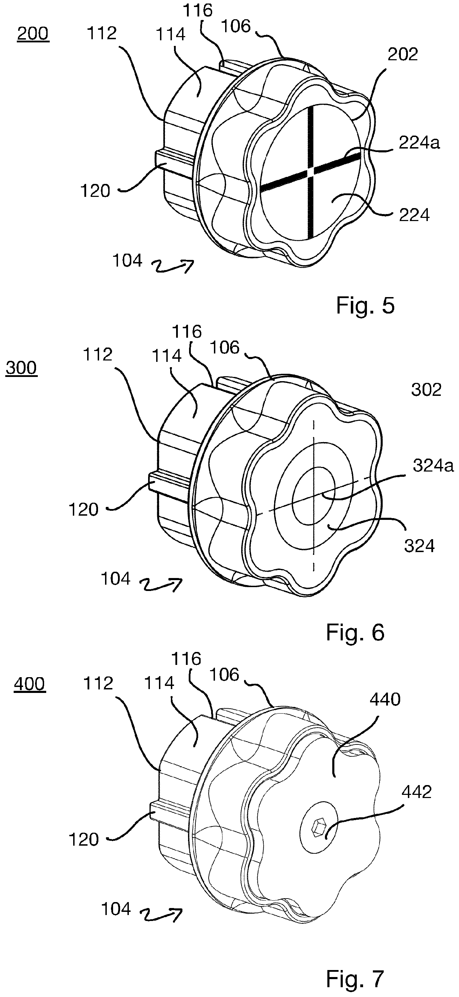

Figur 5 zeigt in perspektivischer Ansicht einen Adapter 200, der ein zweites Ausführungsbeispiel darstellt. Der Adapter 200 unterscheidet sich von dem Adapter 100 des ersten Ausführungsbeispiels lediglich durch eine Vermessungsmarke 202 mit einem anderen Muster 224. Letzteres weist in dem zweiten Ausführungsbeispiel anstelle von vier Sektoren ein Fadenkreuz 224a auf.

Figur 6 zeigt in perspektivischer Ansicht einen Adapter 300, der ein drittes Ausführungsbeispiel darstellt. Der Adapter 300 unterscheidet sich von dem Adapter 200 des zweiten Ausführungsbeispiels lediglich durch eine Vermessungsmarke 302, die ein Muster 324 mit einem modifizierten Fadenkreuz 324a aufweist.

Figur 7 zeigt in perspektivischer Ansicht einen Adapter 400, der ein viertes Ausführungsbeispiel darstellt. Im Unterschied zu den vorhergehenden Ausführungsbeispielen weist der Adapter 400 an seinem von dem Stecker 112 abgewandten Ende eine Montageelement in Form einer Adapterplatte 440 auf. Die Adapterplatte 440 ist z.B. mittels einer Schraubverbindung 442 an dem Adapterkörper 104 befestigt. Die Adapterplatte 440 dient dazu, die Vermessungsmarke lösbar an dem Adapter 400 anzubringen. Der Übersichtlichkeit halber ist die Vermessungsmarke in Figur 7 weggelassen.

In dem Ausführungsbeispiel nach Figur 7 kann die Vermessungsmarke z.B. mit einer Vertiefung versehen sein, die in ihrer Form an die Adapterplatte 440 angepasst ist. So haben die Vertiefung und die daran angepasste Adapterplatte 440 jeweils die Form eines regelmäßigen Polygons mit abgerundeten Ecken. Dadurch ist es dem Benutzer in besonders einfacher Weise möglich, die Adapterplatte 440 lagerichtig in die Vertiefung der Vermessungsmarke einzulegen.

Die Adapterplatte 440 besteht in dem gezeigten Beispiel aus Metall, z.B. aus einem korrosionsbeständigen Stahl. Damit ist die Adapterplatte 440 geeignet, in Wechselwirkung mit einem Magneten die Vermessungsmarke an dem Adapter 400 festzusetzen. Zu diesem Zweck weist die Vermessungsmarke beispielsweise eine Magnetanordnung auf, die an der Adapterplatte 440 anbringbar ist. Die Magnetanordnung kann z.B. in einem Sockel der Vermessungsmarke untergebracht sein. Dadurch ist es möglich, die Vermessungsmarke ohne zusätzliche Befestigungsmittel an dem Adapter 400 zu befestigen.

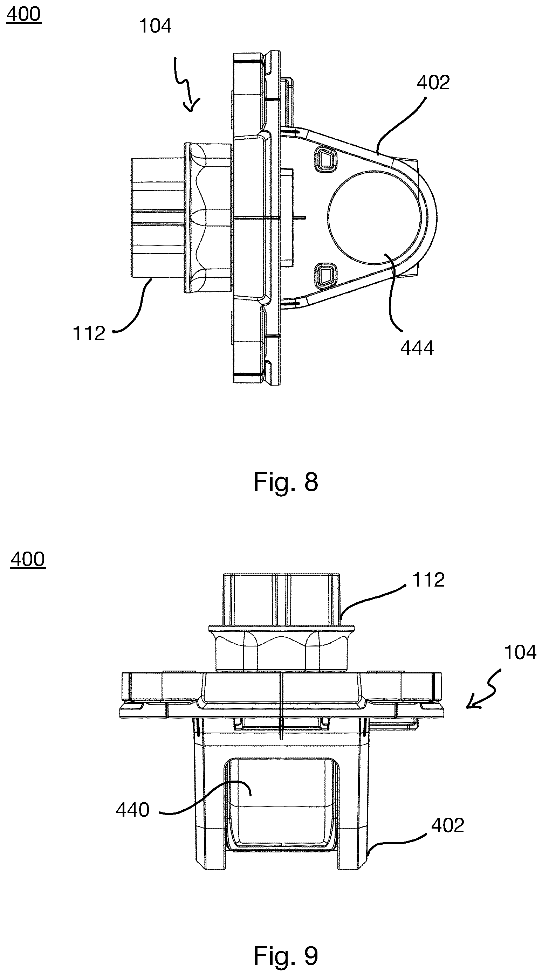

In den Figuren 8 und 9 ist der Adapter 400 mit einer daran befestigten Vermessungsmarke 402 in zwei Seitenansichten gezeigt. In diesem Beispiel umfasst die Vermessungsmarke 402 ein Prisma 444, das sich durch Kippen auf das Messinstrument ausrichten lässt. In den Ansichten nach den Figuren 8 und 9 ist die Adapterplatte 440, über welche die Vermessungsmarke 402 an dem Adapter 400 angebracht ist, verdeckt.

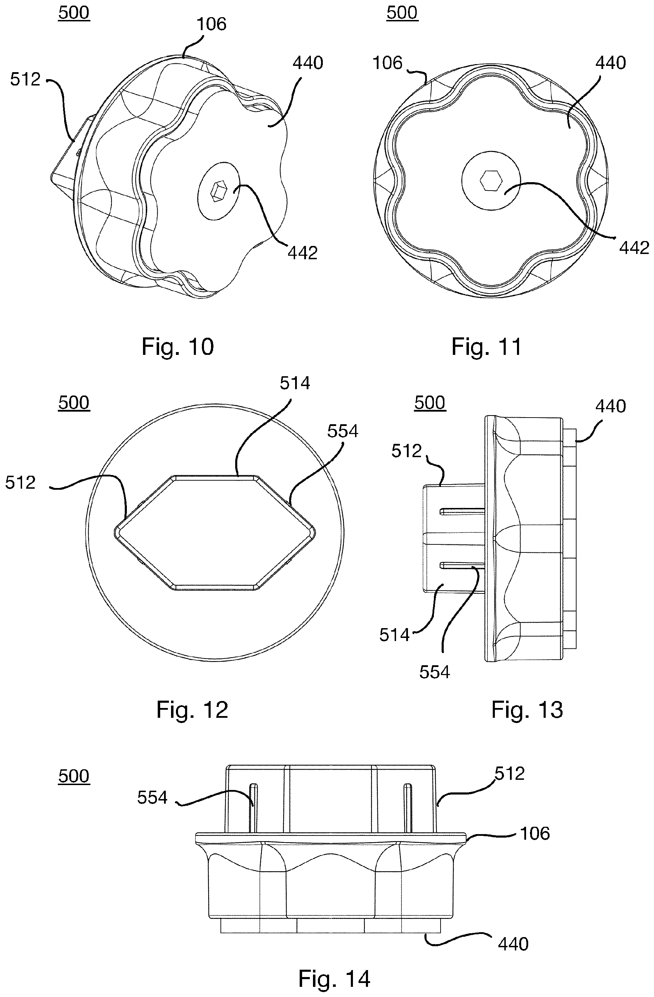

Die Figuren 10 bis 14 zeigen einen Adapter 500, der ein sechstes Ausführungsbeispiel darstellt, in verschiedenen Ansichten. Dabei ist in Figur 10 eine perspektivische Ansicht, in Figur 11 eine Vorderansicht, in Figur 12 eine Rückansicht, in Figur 13 eine erste Seitenansicht und in Figur 14 eine davon verschiedene zweite Seitenansicht des Adapters 500 dargestellt.

Wie der in den Figuren 7 bis 9 gezeigte Adapter 400 weist auch der Adapter 500 die Adapterplatte 440 auf, die an dem Adapterkörper 104 befestigt ist. Der Adapter 500 nach den Figuren 10 bis 14 unterscheidet sich von den vorhergehenden Ausführungsbeispielen dadurch, dass er an einen anderen Typ von Steckverbindung angepasst ist. In dem vorliegenden Beispiel hat der Adapter 500 einen Stecker 512, der entsprechend einem Stecker SN 441011 / Typ 12 geformt ist. Dieser Steckertyp stellt eine Schweizer Norm dar.

Entsprechend dieser Norm bildet der Stecker 512 einen in der Draufsicht hexagonalen Eingriffsteil, der in seiner Form an einen hexagonalen Buchsenteil der zugehörigen Steckdose angepasst ist. Auf einer Außenumfangsfläche 514 des Steckers 512 sind längliche Rippen 554 ausgebildet, die in Eingriff mit entsprechend geformten Nuten des Buchsenteils der passenden Steckdose kommen, wenn der Adapter 500 mit seinem Stecker 412 in die Steckdose gesteckt wird.

Auch in diesem Ausführungsbeispiel übernimmt der an dem Adapter 500 ausgebildete Stecker 512 die Form des genormten Steckertyps nicht in allen Einzelheiten. So weist der Stecker 512 in diesem Beispiel keine Stiftelemente auf, die den Kontaktstiften entsprechen würden, die bei dem genormten Steckertyp vorhanden sind. Wiederum stimmt aber die Form des Steckers 512 jedenfalls insoweit mit der Form des genormten Steckertyps überein, dass die gewünschte formschlüssige Steckverbindung mit der passenden Steckdose erzielt wird.

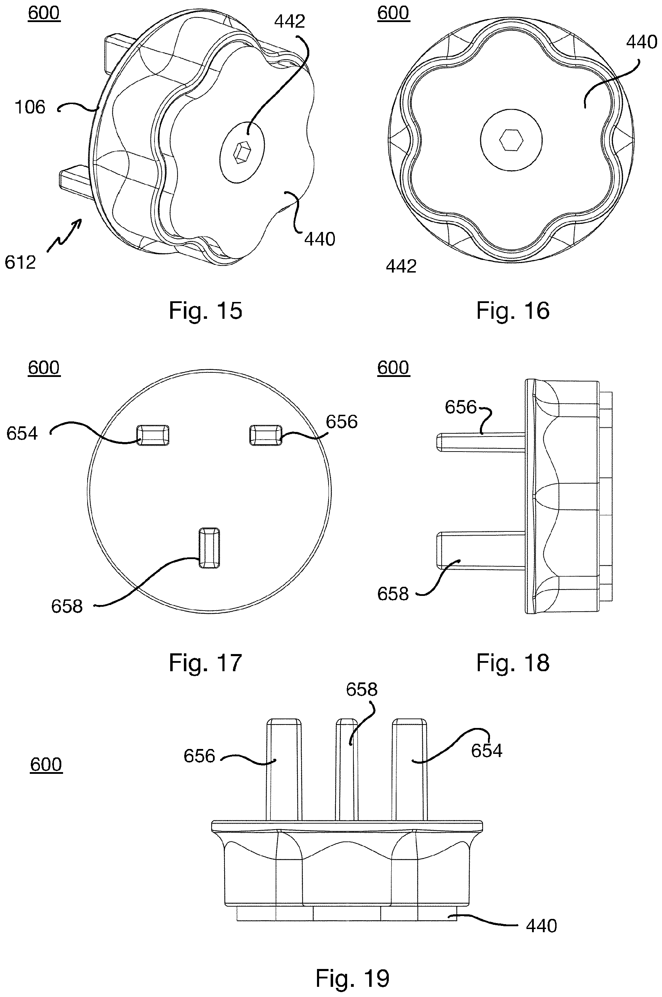

Die Figuren 15 bis 19 zeigen einen Adapter 600, der ein siebentes Ausführungsbeispiel darstellt, in verschiedenen Ansichten. Dabei ist in Figur 15 eine perspektivische Ansicht, in Figur 16 eine Vorderansicht, in Figur 17 eine Rückansicht, in Figur 18 eine erste Seitenansicht und in Figur 19 eine davon verschiedene zweite Seitenansicht des Adapters 600 dargestellt.

Der Adapter 600 unterscheidet sich von dem Adapter 500 des sechsten Ausführungsbeispiels dadurch, dass er an einen anderen Typ von Steckverbindung angepasst ist. So hat der Adapter 600 in diesem Ausführungsbeispiel einen Stecker 612, der entsprechend einem im Vereinigten Königreich (UK) gängigen Steckertyp geformt ist, der drei Kontaktstifte aufweist. Dementsprechend hat auch der Stecker 612 des Adapters 600 drei Kontaktstifte 654, 656 und 658. Die beiden Kontaktstifte 654, 656 haben gleiche Abmessungen. Demgegenüber ist der dritte Kontaktstift 658 breiter.

Wird der Adapter 600 mit seinem Stecker 612 in die passende Steckdose gesteckt, so kommen die Kontaktstifte 654, 656, 658 in Eingriff mit den zugehörigen Kontaktöffnungen der Steckdose. Dadurch wird die formschlüssige Verbindung mit der Steckdose hergestellt. Da insbesondere auch die Kontaktstifte 654, 656, 658 aus einem isolierenden Material gefertigt sind, ist sichergestellt, dass der Adapter 600 von der Steckdose elektrisch isoliert ist.

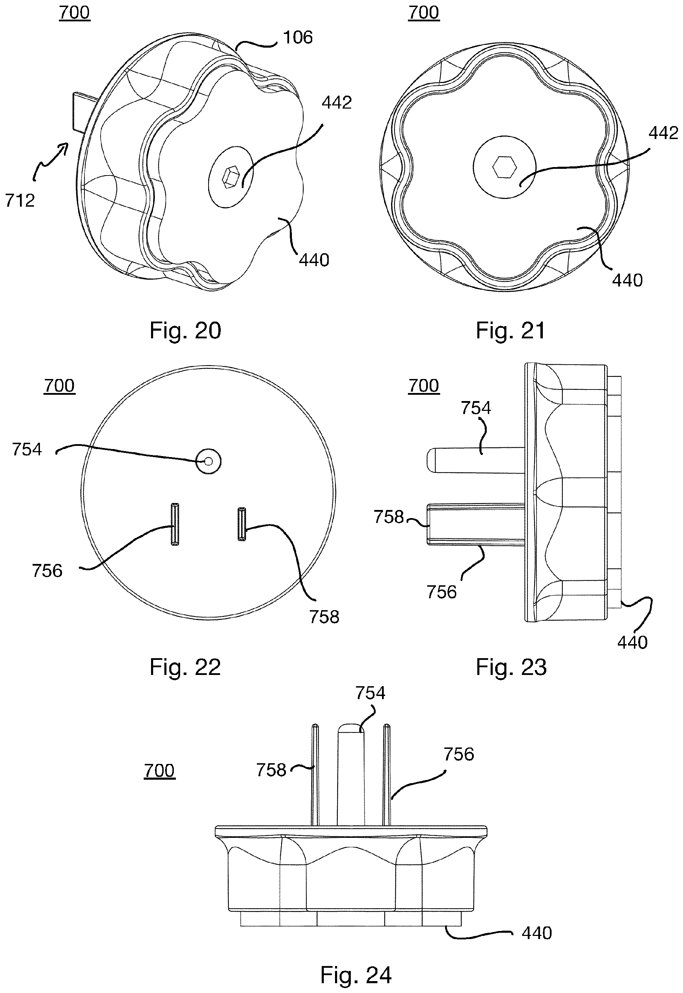

Die Figuren 20 bis 24 zeigen schließlich einen Adapter 700, der ein achtes Ausführungsbeispiel darstellt, in verschiedenen Ansichten. Dabei ist in Figur 20 eine perspektivische Ansicht, in Figur 21 eine Vorderansicht, in Figur 22 eine Rückansicht, in Figur 23 eine erste Seitenansicht und in Figur 24 eine davon verschiedene zweite Seitenansicht des Adapters 600 dargestellt.

Der Adapter 700 unterscheidet sich von den Adaptern 500 und 600 der vorhergehenden Ausführungsbeispiele dadurch, dass er an einen anderen Typ von Steckverbindung angepasst ist. So hat der Adapter 700 in diesem Ausführungsbeispiel einen Stecker 712, der entsprechend einem den anderen, in den USA üblichen Steckertyp geformt ist. Auch dieser Steckertyp hat drei Kontaktstifte. Somit weist auch der Stecker 712 des Adapters 700 drei Kontaktstifte 754, 756 und 758 auf. Die beiden Kontaktstifte 756 und 758 haben eine flache Bauform und sind unterschiedlich breit. Der dritte Kontaktstift 754 ist demgegenüber im Querschnitt rund.

Wird der Adapter 700 mit seinem Stecker 712 in die passende Steckdose gesteckt, so kommen die Kontaktstifte 754, 756, 758 in Eingriff mit den zugehörigen Kontaktöffnungen der Steckdose. Dadurch wird die formschlüssige Verbindung mit der Steckdose hergestellt. Auch die Kontaktstifte 754, 756, 758 bestehen aus einem isolierenden Material.

## Patentansprüche

1. Vorrichtung zum Vermessen eines Referenzpunktes, umfassend einen Adapter (100, 200, 300, 400, 500, 600, 700) zum Anbringen einer Vermessungsmarke (102, 402) an einem Referenzpunkt, umfassend einen Adapterkörper (104), und
eine Vermessungsmarke (102, 402), die fest an dem Adapterkörper (104) angebracht ist, oder die lösbar an dem Adapterkörper (104) anbringbar ist,
**dadurch gekennzeichnet, dass** zumindest ein Teil des Adapterkörpers (104) zu einem Stecker (112, 512, 612, 712) geformt ist, der an eine als Referenzpunkt dienende Steckdose derart angepasst ist, dass er zur Herstellung einer formschlüssigen Steckverbindung in die Steckdose einsteckbar und im eingesteckten Zustand von der Steckdose elektrisch isoliert ist.

2. Vorrichtung nach Anspruch 1, **dadurch gekennzeichnet, dass** der Stecker (112, 512, 612, 712) entsprechend einem Netzwerksteckertyp geformt ist, der für den Anschluss an ein Niederspannungsnetz verwendbar ist.

3. Vorrichtung nach einem der vorhergehenden Ansprüche, **dadurch gekennzeichnet, dass** der Adapterkörper (104) an seinem von dem Stecker (112, 512, 612, 712) abgewandten Ende die Vermessungsmarke (102) oder ein Montageelement (440) zur lösbaren Anbringung der Vermessungsmarke (102) aufweist.

4. Vorrichtung nach Anspruch 3, **dadurch gekennzeichnet, dass** das Montageelement eine Adapterplatte (440) ist, an der die Vermessungsmarke (102) lösbar anbringbar ist.

5. Vorrichtung nach Anspruch 4, **dadurch gekennzeichnet, dass** die Adapterplatte (440) aus Metall gefertigt ist.

6. Vorrichtung nach einem der vorhergehenden Ansprüche, **dadurch gekennzeichnet, dass** der Stecker (612, 712) mindestens einen Kontaktstift (654, 656, 658, 754, 756, 758) aufweist, der in eine zugehörige Kontaktöffnung der Steckdose einsteckbar ist.

7. Vorrichtung nach einem der vorhergehenden Ansprüche, **gekennzeichnet durch** mindestens eine an einer Außenumfangsfläche (114) des Steckers ausgebildete Aussparung (116, 118), die an eine Erdungsklemme der Steckdose angepasst ist, und/oder mindestens einen an der Außenumfangsfläche (114) des Steckers ausgebildeten Vorsprung (120, 122), der an eine Vertiefung der Steckdose angepasst ist.

8. Vorrichtung nach Anspruch 1-4, 6 oder 7, **dadurch gekennzeichnet, dass** der Adapter als Ganzes aus einem elektrisch isolierenden Material gefertigt ist.

9. Vorrichtung nach einem der vorhergehenden Ansprüche, **dadurch gekennzeichnet, dass** der Adapter aus einem Spritzgusssteil gefertigt ist.

10. Vorrichtung nach einem der vorhergehenden Ansprüche, **dadurch gekennzeichnet, dass** die Vermessungsmarke (102, 402), wenn die Vermessungsmarke (102, 402) lösbar an dem Adapterkörper (104) anbringbar ist, eine Vertiefung aufweist, die in ihrer Form an die Adapterplatte (440) gemäß Anspruch 4 oder 5 angepasst ist.

11. Vorrichtung nach Anspruch 10, **dadurch gekennzeichnet, dass** die Vermessungsmarke (402) eine Magnetanordnung aufweist, die an die aus Metall gefertigte Adapterplatte (440) anbringbar ist.

12. Vorrichtung nach einem der vorhergehenden Ansprüche, **dadurch gekennzeichnet, dass** die Vermessungsmarke (102, 402) eine Reflexzielmarke, eine Klebemarke, Vermessungsplakette, ein Prisma, eine Laserscanner-Marke oder eine Laserscanner-Kugel umfasst.

13. Einrichtung umfassend eine Steckdose und eine Vorrichtung nach einem der vorhergehenden Ansprüche, wobei der Stecker (112, 512, 612, 712) des Adapters zur Herstellung einer formschlüssigen Steckverbindung in die Steckdose einsteckbar und im eingesteckten Zustand von der Steckdose elektrisch isoliert ist.

14. Verfahren zum Vermessen eines Referenzpunktes unter Verwendung einer Vorrichtung (100, 200, 300, 400, 500, 600, 700) nach einem der vorhergehenden Ansprüche 1 bis 12, wobei der Adapter an einer als Referenzpunkt dienenden Steckdose angebracht wird, indem der zu dem Stecker (112, 512, 612, 712) geformte Teil des Adapterkörpers (104) in die Steckdose eingesteckt und dadurch eine formschlüssige und elektrisch isolierte Verbindung mit der Steckdose hergestellt wird.

## Claims

1. Device for measuring a reference point, comprising an adapter (100, 200, 300, 400, 500, 600, 700) for attaching a measuring mark (102, 402) to a reference point, comprising an adapter body (104), and
a measuring mark (102, 402) which is attached permanently to the adapter body (104) or which can be attached to the adapter body (104) releasably,
**characterized in that** at least a part of the adapter body (104) is formed as a plug (112, 512, 612, 712) which is adapted to a socket, serving as reference point, in such a way that it can be plugged into the socket in order to produce a positive plug connection and is electrically insulated from the socket in the plugged-in state.

2. Device according to Claim 1, **characterized in that** the plug (112, 512, 612, 712) is formed according to a network plug type which can be used for connection to a low-voltage network.

3. Device according to either of the preceding claims, **characterized in that**, at its end facing away from the plug (112, 512, 612, 712), the adapter body (104) has the measuring mark (102) or a mounting element (440) for the releasable attachment of the measuring mark (102).

4. Device according to Claim 3, **characterized in that** the mounting element is an adapter plate (440), to which the measuring mark (102) can be attached releasably.

5. Device according to Claim 4, **characterized in that** the adapter plate (440) is made of metal.

6. Device according to any one of the preceding claims, **characterized in that** the plug (612, 712) has at least one contact pin (654, 656, 658, 754, 756, 758), which can be plugged into an associated contact opening of the socket.

7. Device according to any one of the preceding claims, **characterized by** at least one cutout (116, 118) formed on an outer peripheral surface (114) of the plug, which cutout is adapted to an earthing terminal of the socket, and/or at least one projection (120, 122) formed on the outer peripheral surface (114) of the plug, which projection is adapted to a recess in the socket.

8. Device according to Claim 1-4, 6 or 7, **characterized in that** the adapter as a whole is made from an electrically insulating material.

9. Device according to any one of the preceding claims, **characterized in that** the adapter is made from an injection-moulded part.

10. Device according to any one of the preceding claims, **characterized in that**, when the measuring mark (102, 402) can be attached to the adapter body (104) releasably, the measuring mark (102, 402) has a recess which is adapted in its shape to the adapter plate (440) according to Claim 4 or 5.

11. Device according to Claim 10, **characterized in that** the measuring mark (402) has a magnet arrangement, which can be attached to adapter plate (440) made of metal.

12. Device according to any one of the preceding claims, **characterized in that** the measuring mark (102, 402) comprises a reflective target mark, an adhesive mark, a measuring plate, a prism, a laser scanner mark or a laser scanner sphere.

13. Appliance comprising a socket and a device according to any one of the preceding claims, wherein the plug (112, 512, 612, 712) of the adapter can be plugged into the socket in order to produce a positive plug connection and is electrically insulated from the socket in the plugged-in state.

14. Method for measuring a reference point using a device (100, 200, 300, 400, 500, 600, 700) according to any one of the preceding Claims 1 to 12, wherein the adapter is attached to a socket, serving as reference point, by inserting the part of the adapter body (104) formed as the plug (112, 512, 612, 712) into the socket and thereby producing a positive and electrically insulated connection to the socket.

## Revendications

1. Dispositif pour la mesure d'un point de référence, comprenant
un adaptateur (100, 200, 300, 400, 500, 600, 700) destiné à placer une marque de mesure (102, 402) sur un point de référence, comprenant un corps d'adaptateur (104), et une marque de mesure (102, 402) qui est placée de manière fixe sur le corps d'adaptateur (104) ou qui peut être placée de manière amovible sur le corps d'adaptateur (104),
**caractérisé en ce qu'**au moins une partie du corps d'adaptateur (104) est formée en une fiche (112, 512, 612, 712) adaptée à une prise servant de point de référence, de sorte qu'elle peut être insérée dans la prise pour établir une connexion enfichable par complémentarité de forme et qu'elle est, à l'état inséré, électriquement isolée de la prise.

2. Dispositif selon la revendication 1, **caractérisé en ce que** la fiche (112, 512, 612, 712) est formée conformément à un type de connecteur réseau utilisable pour le raccordement à un réseau basse tension.

3. Dispositif selon l'une des revendications précédentes, **caractérisé en ce que** le corps d'adaptateur (104) présente, à son extrémité opposée à la fiche (112, 512, 612, 712), la marque de mesure (102) ou un élément de montage (440) pour le placement amovible de la marque de mesure (102).

4. Dispositif selon la revendication 3, **caractérisé en ce que** l'élément de montage est une plaque d'adaptateur (440), sur laquelle la marque de mesure (102) peut être placée de manière amovible.

5. Dispositif selon la revendication 4, **caractérisé en ce que** la plaque d'adaptateur (440) est réalisée en métal.

6. Dispositif selon l'une des revendications précédentes, **caractérisé en ce que** la fiche (612, 712) présente au moins une broche de contact (654, 656, 658, 754, 756, 758) pouvant être insérée dans une ouverture de contact correspondante de la prise.

7. Dispositif selon l'une des revendications précédentes, **caractérisé par** au moins une évidement (116, 118) formé sur une surface de circonférence extérieure (114) de la fiche, adapté à une borne de mise à la terre de la prise, et/ou par au moins une saillie (120, 122) formée sur la surface de circonférence extérieure (114) de la fiche, adaptée à une dépression de la prise.

8. Dispositif selon l'une des revendications 1 à 4, 6 ou 7, **caractérisé en ce que** l'adaptateur est, dans son ensemble, réalisé en un matériau électriquement isolant.

9. Dispositif selon l'une des revendications précédentes, **caractérisé en ce que** l'adaptateur est réalisé en une pièce moulée par injection.

10. Dispositif selon l'une des revendications précédentes, **caractérisé en ce que** la marque de mesure (102, 402), lorsque la marque de mesure (102, 402) peut être placée de manière amovible sur le corps d'adaptateur (104), présente une dépression dont la forme est adaptée à la plaque d'adaptateur (440) selon la revendication 4 ou 5.

11. Dispositif selon la revendication 10, **caractérisé en ce que** la marque de mesure (402) présente un agencement magnétique pouvant être placé sur la plaque d'adaptateur (440) réalisée en métal.

12. Dispositif selon l'une des revendications précédentes, **caractérisé en ce que** la marque de mesure (102, 402) comprend une marque de cible réfléchissante, une marque adhésive, une plaquette de mesure, un prisme, une marque pour scanner laser ou une sphère pour scanner laser.

13. Ensemble comprenant une prise et un dispositif selon l'une des revendications précédentes, la fiche (112, 512, 612, 712) de l'adaptateur pouvant être insérée dans la prise pour établir une connexion enfichable par complémentarité de forme et étant, à l'état inséré, électriquement isolée de la prise.

14. Procédé de mesure d'un point de référence au moyen d'un dispositif (100, 200, 300, 400, 500, 600, 700) selon l'une des revendications précédentes 1 à 12, dans lequel l'adaptateur est placé sur une prise servant de point de référence, par le fait que la partie du corps d'adaptateur (104) formée en fiche (112, 512, 612, 712) est insérée dans la prise et qu'ainsi une connexion par complémentarité de forme et électriquement isolée avec la prise est établie.
